# EUROPEAN PATENT SPECIFICATION

(11) **EP 2 754 590 B1**
(45) Date of publication and mention of the grant of the patent: **13.01.2016**
(21) Application number: 12815028.1
(22) Date of filing: 19.07.2012
(51) Int. Cl.: B60T 7/12, B60T 17/00, F02D 29/02

(54) **VEHICLE CONTROL APPARATUS**
STEUERUNGSVORRICHTUNG FÜR EIN FAHRZEUG
APPAREIL DE COMMANDE DE VÉHICULE

(30) Priority: 19.07.2011 JP 2011158207
(43) Date of publication of application: 16.07.2014
(73) Proprietor: ADVICS CO., LTD., 2-1, Showa-cho, Kariya-city, Aichi-pref. 448-8688 (JP)
(72) Inventor: MORI, Yukio, Kariya-city, Aichi-pref. 448-8688 (JP); HASHIMOTO, Yosuke, Kariya-city, Aichi-pref. 448-8688 (JP); NAKASO, Hiroyuki, Kariya-city, Aichi-pref. 448-8688 (JP)
(74) Representative: Winter, Brandl, Fürniss, Hübner, Röss, Kaiser, Polte - Partnerschaft mbB
(86) International application number: PCT/JP2012/068329
(87) International publication number: WO 2013/012034

(56) References cited:
- WO-A1-2011/042987
- JP-A- 2004 100 576
- JP-A- 2006 111 220

## Description

### TECHNICAL FIELD

The present invention relates to a control apparatus mounted in a vehicle that has a function of automatically stopping and restarting the engine.

### BACKGROUND ART

To improve fuel efficiency, vehicles with an idling stop function have been developed. The idling stop function allows a vehicle to automatically stop the engine when or immediately before the vehicle stops and to automatically restart the engine in response to a driver's operation for starting the vehicle (see Patent Document 1). A vehicle with the idling stop function includes a braking device having a booster with a constant pressure chamber, which communicates with an intake manifold in which negative pressure is produced through engine operation. The booster uses the pressure difference (hereinafter, referred to also as the "booster pressure") between the negative pressure in the constant pressure chamber and the atmospheric pressure to boost the force produced through operation of the brake pedal by the driver.

When the engine is stopped, the negative pressure in the constant pressure chamber of the booster may approximate the atmospheric pressure through slight braking operations by the driver, for example. In this case, the reduced booster pressure prevents the booster from appropriately increasing the force produced through operation of the brake pedal by the driver. This decreases the braking force applied to the wheels through the brake pedal operation by the driver.

To solve this problem, a control apparatus described in Patent Document 1 detects the negative pressure in the constant pressure chamber at predetermined time intervals when the engine is in an automatically stopped state. If the negative pressure in the constant pressure chamber approaches the atmospheric pressure compared with a reference value set in advance, it is determined that sufficient braking force cannot be applied to the wheels through the brake pedal operation by the driver. In this case, braking control for increasing the braking force applied to the wheels and engine restart control for restarting the engine are started. As a result, unintentional vehicle movement at the time of restarting the engine is made unlikely through the braking control. Also, the engine is restarted to recover the negative pressure in the constant pressure chamber through the engine restart control.

### PRIOR ART DOCUMENTS

### Patent Documents

Patent Document 1: Japanese Laid-Open Patent Publication No. 2001-163198

### SUMMARY OF THE INVENTION

### Problems that the Invention is to Solve

If the braking control and the engine restart control are started simultaneously when the engine is not running, the problem described below occurs. That is, in the braking control, a pump mounted in the braking device is activated to supply high-pressure brake fluid into wheel cylinders, thus applying the braking force corresponding to the brake fluid pressure in each of the wheel cylinders to the wheels. At this stage, the braking device consumes a great amount of electric power to actuate the pump. On the other hand, in the engine restart control, a starter motor is actuated to perform cranking. At this stage, the engine consumes a great amount of electric power to drive the starter motor. In other words, once executed simultaneously, the braking control and the engine restart control instantaneously cause excessive consumption of electric power by the vehicle.

Document JP 2006 111220 A discloses a vehicle control apparatus according to the preamble of independent claim 1.

Accordingly, it is an objective of the present invention to provide a vehicle control apparatus that restricts excessive electric power consumption by the vehicle when engine restart is initiated due to reduction of negative pressure in a booster. Means for Solving the Problems

To achieve the foregoing objective and in accordance with one aspect of the present invention, a vehicle control apparatus mounted in a vehicle having a braking device (16) is provided. The braking device (16) causes a booster (26) to increase brake operating force produced by a driver by using negative pressure (Pb) generated through operation of an engine (12), thereby producing brake fluid pressure (Pmc, Pwc) corresponding to the increased brake operating force in a master cylinder (25) and a wheel cylinder (32a, 32b, 32c, 32d) and applying braking force corresponding to the brake fluid pressure (Pwc) in the wheel cylinder (32a, 32b, 32c, 32d) to a wheel (FR, FL, RR, RL). The vehicle control apparatus automatically stops and restarts the engine (12). The vehicle control apparatus is characterized by a force maintaining control section (55, S18, S45) that carries out force maintaining control to maintain the braking force applied to the wheel (FR, FF, RR, RL) when engine restart is initiated due to approach of the negative pressure (Pb) in the booster (26) obtained when the engine (12) is not running to the atmospheric pressure compared with a restart reference value (Pbth1), which is set as a reference for determining whether the engine (12) should be restarted.

In the above-described configuration, when the negative pressure in the booster approaches the atmospheric pressure compared with the restart reference value and the engine restart is initiated, the force maintaining control is carried out to maintain the braking force applied to the wheel by maintaining the brake fluid pressure in the wheel cylinder. In other words, as long as the engine restarting process continues, the braking force applied to the wheel is prevented from decreasing. Further, compared with a case where the force increasing control is carried out to increase the braking force applied to the wheel, the force maintaining control does not need activation of a drive source to increase the braking force applied to the wheel. The force maintaining control thus consumes a comparatively small amount of electric power. As a result, when the negative pressure in the booster decreases and the engine restart is initiated, excessive consumption of electric power by the vehicle is restricted.

The vehicle control apparatus according to the present invention includes a force increasing control section (55, S28, S51) that performs force increasing control for increasing the braking force applied to the wheel (FR, FL, RR, RL) when the negative pressure (Pb) in the booster (26) obtained during the restart of the engine (12) approaches the atmospheric pressure compared with a force increase starting reference value (Pbth2), which is closer to the atmospheric pressure than the restart reference value (Pbth1).

Even during engine restart, the negative pressure in the booster may gradually approach the atmospheric pressure. Accordingly, in the present invention, the force increasing control may be performed if the negative pressure in the booster approaches the atmospheric pressure compared with the force increase starting reference value even during the engine restarting and the force maintaining control in execution. Even when the force increasing control is started at or after the time point at which the negative pressure in the booster approaches the atmospheric pressure compared with the force increase starting reference value, there is a delay between the start of the force increasing control and the initiation of the engine restart control, through which the engine restarts. In other words, it is highly likely that the force increasing control is not yet started in the initial period of the engine restart control, which consumes a maximum amount of electric power. This restricts excessive electric power consumption by the vehicle when the negative pressure in the booster decreases and the engine restart initiated.

In the vehicle control apparatus according to the present invention, when the elapsed time (T1) since the initiation of the restart of the engine (12) is less than a restart prioritizing time (T1th), which is set for causing the restart of the engine (12) to be performed on a priority basis over the force increasing control, the force increasing control section (55, S28) preferably does not carry out the force increasing control.

In this configuration, when the time that has elapsed since the initiation of the engine restart, which is caused by the negative pressure in the booster approaching the atmospheric pressure compared with the restart reference value, is less than the restart prioritizing time, the engine restart, which is to recover the negative pressure in the booster, is carried out on a priority basis over increasing the braking force applied to the wheel. The engine restart control and the force increasing control are thus not performed simultaneously or are performed simultaneously only for a limited period of time.

The vehicle control apparatus according to the present invention preferably further includes a change gradient obtaining section (55, S11) that obtains the change gradient (ΔPb) of the negative pressure (Pb) in the booster (26) at the restart of the engine (12) and a time setting section (55, S15) that sets the restart prioritizing time (T1th) to a shorter time when the obtained change gradient (ΔPb) is great than when the obtained change gradient (ΔPb) is small.

In this configuration, during the restart of the engine, the maximum braking force applied to the wheel through braking operation by the driver is smaller when the negative pressure in the booster changes with a large gradient than when the booster negative pressure changes with a small gradient. The restart prioritizing time is thus set to a smaller value than the restart prioritizing time for a case with a small gradient of change. In other words, if the maximum braking force applied to the wheel through braking operation by the driver is small, the force increasing control is started immediately.

In contrast, during the engine restart, the maximum braking force applied to the wheel through braking operation by the driver is greater when the negative pressure in the booster changes with a small gradient than when the booster negative pressure changes with a large gradient. The restart prioritizing time is thus set to be longer than the restart prioritizing time for a case with a large gradient. This prolongs the time in which the electric power charged in the battery mounted in the vehicle is consumed for the engine restart on a priority basis, thus correspondingly improving the success rate of the engine restart.

In the vehicle control apparatus according to the present invention, in a case in which the elapsed time (T1) since the initiation of the restart of the engine (12) is longer than or equal to the restart prioritizing time (T1th), the force increasing control section (55, S28) preferably does not perform the force increasing control if the engine (12) has been restarted, but carries out the force increasing control if the engine (12) has not been restarted and the negative pressure (Pb) in the booster (26) approaches the atmospheric pressure compared with the force increase starting reference value (Pbth2).

When the engine restart fails and the negative pressure in the booster is prevented from recovering, the force increasing control is carried out in the above-configuration. In contrast, if the engine restart is successfully accomplished, the negative pressure in the booster is recovered through engine operation. In this case, sufficient braking force is applied to the wheel through braking operation by the driver, and the force increasing control is not carried out. This reduces the electric power consumed by the vehicle when the engine is restarted, compared with a case in which the force increasing control is performed even when the engine restart is successfully accomplished.

The vehicle control apparatus according to the present invention preferably further includes an electric power amount obtaining section (55, S24, S48) that obtains, as a usable electric power amount (Pa), the amount of the electric power that is consumable by the braking device (16) at the restart of the engine (12). In this case, the force increasing control section (55, S28, S51) preferably performs the force increasing control when the following conditions are met: that the usable electric power amount (Pa) obtained by the electric power amount obtaining section (55, S24, S48) during the restart of the engine (12) is greater than or equal to a reference electric power amount (Path1) set as a reference for determining whether execution of the force increasing control should be permitted; and that the negative pressure (Pb) in the booster (26) approaches the atmospheric pressure compared with the force increase starting reference value (Pbth2).

In this configuration, if the obtained usable electric power amount is greater than or equal to the reference electric power amount, it is determined that execution of the force increasing control will not cause shortage of the remaining battery level of the battery mounted in the vehicle even if the engine restart is carried out. In other words, as long as the battery of the vehicle stores sufficient electric power for the force increasing control, the force increasing control can be performed during the engine restart. This quickly increases the braking force applied to the wheel, compared with a case in which the force increasing control is started after the engine restart control is ended.

The vehicle control apparatus according to the present invention preferably further includes a control content setting section (55, S27) that sets at least one of an increase speed and an increase amount of the braking force applied to the wheel (FR, FL, RR, RL) based on an elapsed time (T2) from when the negative pressure (Pb) in the booster (26) obtained during the restart of the engine (12) approaches the atmospheric pressure compared with the force increase starting reference value (Pbth2) to when the force increasing control is started by the force increasing control section (55, S28). When performing the force increasing control, the force increasing control section (55, S28) controls the braking device (16) based on the content set by the control content setting section (55, S27).

In this configuration, the content of the force increasing control is set based on the time elapsed from when the negative pressure in the booster approaches the atmospheric pressure compared with the force increase starting reference value to when the force increasing control is started. If the increase speed is set based on the aforementioned elapsed time, for example, the increase speed is set to a higher speed when the elapsed time is long than when the elapsed time is short. Also, if the increase amount is set based on the elapsed time, the increase amount is set to a greater value when the elapsed time is long than when the elapsed time is short. In execution of the force increasing control, the braking force applied to the wheel is increased based on the set content (at least one of the increase speed and the increase amount).

In the vehicle control apparatus according to the present invention, when the usable electric power amount (Pa) obtained by the electric power amount obtaining section (55, S24, S48) during the restart of the engine (12) is less than the reference electric power amount (Path1), the force increasing control section (55, S28, S51) preferably does not perform the force increasing control.

In this configuration, if the usable electric power amount obtained during the engine restart is less than the reference electric power amount, the force increasing control is not performed even if the negative pressure in the booster approaches the atmospheric pressure compared with the force increase starting reference value. This saves the electric power consumed by the vehicle. However, even in this case, the force increasing control may be performed after the engine restart control is ended and the usable electric power amount is recovered to a value greater than or equal to the reference electric power amount.

The present invention has been described with reference to the reference numerals given to the embodiments illustrated in the drawings for illustrative purposes. However, obviously, the invention is not restricted to the illustrated embodiments.

### BRIEF DESCRIPTION OF THE DRAWINGS

Fig. 1 is a block diagram representing an example of a vehicle having a brake ECU, which is an embodiment of a vehicle control apparatus according to the present invention;
Fig. 2 is a block diagram representing a braking device according to a first embodiment of the invention;
Fig. 3 is a flowchart representing (the first half of) a braking process routine for engine restart according to the first embodiment;
Fig. 4 is a flowchart representing (the latter half of) the engine-restart braking process routine according to the first embodiment;
Fig. 5 is a timing chart representing changes in booster pressure, engine speed, battery voltage, a brake switch detection signal, and brake fluid pressure at the time when the engine is restarted according to the first embodiment;
Fig. 6 is a timing chart representing changes in booster pressure, engine speed, battery voltage, a brake switch detection signal, and brake fluid pressure at the time when the engine is restarted according to the first embodiment;
Fig. 7 is a timing chart representing changes in booster pressure, engine speed, battery voltage, a brake switch detection signal, and brake fluid pressure at the time when the engine is restarted according to the first embodiment;
Fig. 8 is a flowchart representing the routine of a braking process for engine restart according to a second embodiment of the invention; and
Fig. 9 is a timing chart representing changes in booster pressure, engine speed, battery voltage, a brake switch detection signal, and brake fluid pressure at the time when the engine is restarted according to the second embodiment.

### MODES FOR CARRYING OUT THE INVENTION

### First Embodiment

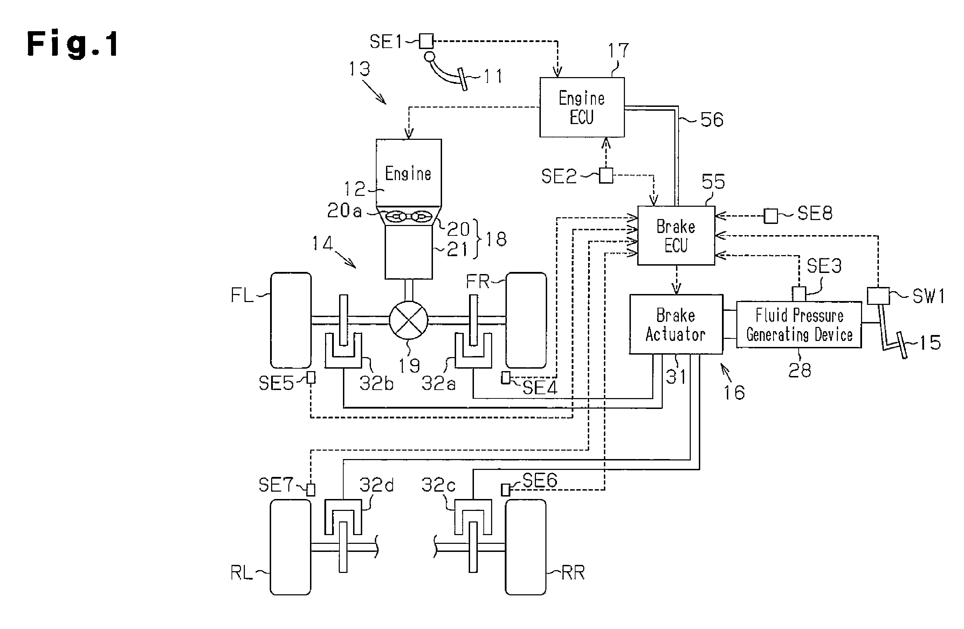

A first embodiment of the present invention will now be described with reference to Figs. 1 to 7. In the following description of the present specification, the travelling direction (forward direction) of a vehicle is referred to as the frontward side (front of vehicle).

A vehicle of the first embodiment has idling stop function. Specifically, to enhance fuel efficiency and improve emission performance, the vehicle automatically stops the engine during traveling if a predetermined stopping condition is satisfied. Then, when a predetermined starting condition is satisfied, the vehicle automatically restarts the engine. The vehicle thus automatically stops the engine when the vehicle decelerates or stops through braking operation by the driver.

The vehicle with the idling stop function will hereafter be described by way of example.

With reference to Fig. 1, the vehicle is a front-wheel-drive vehicle in which the front wheels FR, FL function as the drive wheels, out of a plurality of (in the first embodiment, four) wheels (including the front right wheel FR, the front left wheel FL, the rear right wheel RR, and the rear left wheel RL). The vehicle includes a drive force generating device 13 and a drive force transmitting device 14. The drive force generating device 13 has an engine 12, which produces drive force by the amount corresponding to the operation amount of an accelerator pedal 11 by the driver. The drive force transmitting device 14 transmits the drive force generated by the drive force generating device 13 to the front wheels FR, FL. The vehicle also includes a braking device 16, which applies braking force to the wheels FR, FL, RR, RL by the amount corresponding to the operating force applied to a brake pedal 15 by the driver, or, in other words, brake operating force.

The drive force generating device 13 includes a fuel injecting device (not shown) having an injector, which is arranged in the vicinity of an intake port (not shown) of the engine 12 to inject fuel into the engine 12. The drive force generating device 13 operates through control by an engine ECU 17 (referred to also as an "electronic engine control unit"), which has a CPU, a ROM, and a RAM, all non-illustrated. An accelerator pedal position sensor SE1 and an engine speed sensor SE2 are electrically connected to the engine ECU 17. The accelerator pedal position sensor SE1 outputs a detection signal corresponding to the operated amount of the accelerator pedal 11 depressed by the driver, which is the accelerator pedal position, to the engine ECU 17. The engine speed sensor SE2 outputs a detection signal corresponding to the speed of the engine 12 (hereinafter, referred to also as the "engine speed") to the engine ECU 17. The engine ECU 17 calculates the accelerator pedal position and the engine speed using the detection signals from the sensors SE1, SE2 and controls the drive force generating device 13 based on the calculation results of the accelerator pedal position and the engine speed.

The drive force transmitting device 14 includes an automatic transmission 18, a differential gear 19, and a non-illustrated AT ECU. The differential gear 19 receives the drive force transmitted from the output shaft of the automatic transmission 18 and distributes the drive force appropriately to the front wheels FR, FL. The AT ECU controls the automatic transmission 18. The automatic transmission 18 includes a fluid type drive force transmitting mechanism 20 having a torque converter 20a, which is an example of fluid coupling, and a transmission mechanism 21.

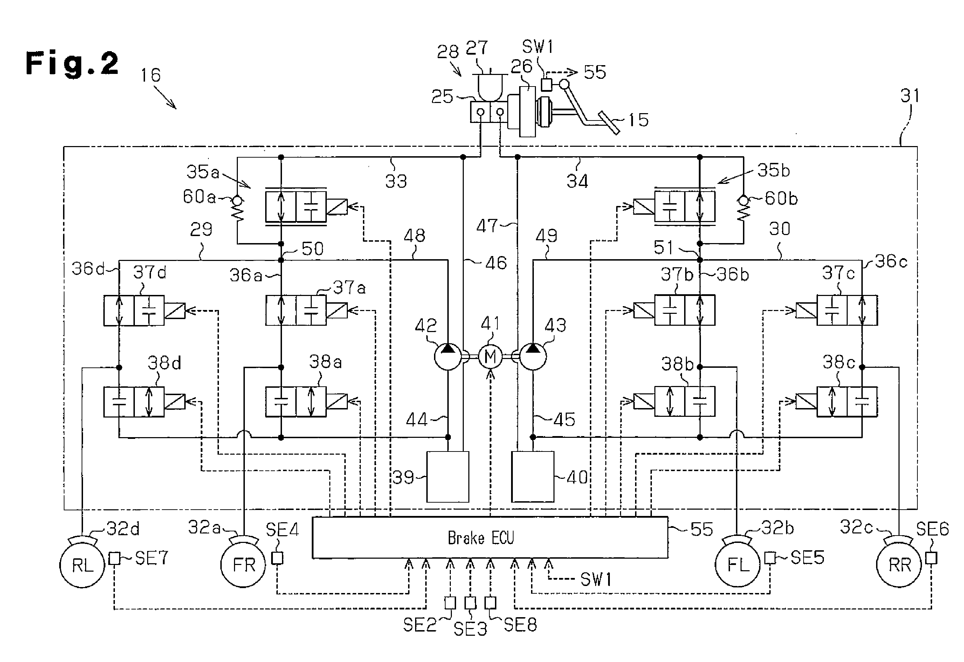

As illustrated in Figs. 1 and 2, the braking device 16 has a fluid pressure generating device 28 including a master cylinder 25, a booster 26, and a reservoir 27, and a brake actuator 31 (which is represented by the broken lines in which a long dash alternates with a pair of short dashes in Fig. 2), which includes first and second hydraulic circuits 29, 30. The hydraulic circuits 29, 30 are connected to the master cylinder 25 of the fluid pressure generating device 28. A wheel cylinder 32a of the front right wheel FR and a wheel cylinder 32d of the rear left wheel RL are connected to the first hydraulic circuit 29. A wheel cylinder 32b of the front left wheel FL and a wheel cylinder 32c of the rear right wheel RR are connected to the second hydraulic circuit 30.

In the fluid pressure generating device 28, the booster 26 is connected to a non-illustrated intake manifold, in which negative pressure is produced when the engine 12 is in operation. The booster 26 boosts (increases) the brake operating force applied by the driver using the pressure difference between the negative pressure generated in the intake manifold and the atmospheric pressure. In the first embodiment, the "pressure difference between the negative pressure generated in the intake manifold and the atmospheric pressure" is referred to as the "booster pressure." The booster pressure decreases as the negative pressure generated in the intake manifold approaches the atmospheric pressure.

The vehicle of the first embodiment has a booster pressure sensor SE3 for detecting the booster pressure in the booster 26. The booster pressure sensor SE3 outputs a detection signal corresponding to the negative pressure generated in the intake manifold to a brake ECU 55, which will be described below.

The master cylinder 25 produces brake fluid pressure corresponding to the brake operating force applied by the driver. The brake fluid pressure, which is generated by the master cylinder 25, is the fluid pressure corresponding to the brake operating force that is applied by the driver and boosted by the booster 26. The master cylinder 25 provides the brake fluid into the wheel cylinders 32a to 32d through the hydraulic circuits 29, 30 based on the brake fluid pressure generated in the master cylinder 25. This applies the braking force corresponding to the brake fluid pressure in the wheel cylinders 32a to 32d to the corresponding wheels FR, FL, RR, RL. In the first embodiment, the brake fluid pressure in the master cylinder 25 is referred to as the "master cylinder pressure" and the brake fluid pressure in each of the wheel cylinders 32a to 32d is referred to as the "wheel cylinder pressure."

The hydraulic circuits 29, 30 of the brake actuator 31 are connected to the master cylinder 25 through corresponding connection lines 33, 34. The connection lines 33 and 34 have normally open type linear solenoid valves (pressure difference adjustment valves) 35a and 35b, respectively. Each of the linear solenoid valves 35a, 35b has a valve seat, a valve body, an electromagnetic coil, and an urging member (such as a coil spring) for urging the valve body away from the valve seat. The valve body moves in correspondence with the electric current supplied to each electromagnetic coil by the brake ECU 55. Specifically, when the brake pedal 15 is depressed, the wheel cylinder pressure in each of the wheel cylinders 32a to 32d is maintained as the fluid pressure corresponding to the electric current supplied to the associated linear solenoid valve 35a, 35b.

The connection lines 33 and 34 have check valves 60a and 60b, respectively, which are arranged in parallel with the corresponding linear solenoid valves 35a, 35b. Each of the check valves 60a, 60b is a one-way valve, which restricts the brake fluid flowing from the corresponding one of the wheel cylinders 32a to 32d to the master cylinder 25 and permits the brake fluid to flow from the master cylinder 25 to the corresponding wheel cylinders 32a to 32d.

The first hydraulic circuit 29 includes a front right wheel line 36a, which is connected to the wheel cylinder 32a, and a rear left wheel line 36d, which is connected to the wheel cylinder 32d. The second hydraulic circuit 30 includes a front left wheel line 36b, which is connected to the wheel cylinder 32b, and a rear right wheel line 36c, which is connected to the wheel cylinder 32c. As a result, in the first embodiment, the connection lines 33, 34 and the lines 36a to 36d configure a passage by which the master cylinder 25 is connected to the wheel cylinders 32a to 32d. Further, the lines 36a, 36b, 36c, and 36d include pressure increasing valves 37a, 37b, 37c, and 37d, respectively, and pressure decreasing valves 38a, 38b, 38c, and 38d, respectively. Each of the pressure increasing valves 37a to 37d is a normally open type solenoid valve, which is actuated to restrict increase of the wheel cylinder pressure in the corresponding one of the wheel cylinders 32a to 32d. Each of the pressure decreasing valves 38a to 38d is a normally closed type solenoid valve, which is activated to decrease the wheel cylinder pressure.

Reservoirs 39 and 40 are connected to the hydraulic circuits 29, 30, respectively, to temporarily store the brake fluid sent from the corresponding wheel cylinders 32a to 32d through the associated pressure decreasing valves 38a to 38d. Pumps 42 and 43 are also connected to the hydraulic circuits 29 and 30, respectively, and actuated through rotation of a motor 41. The reservoirs 39, 40 are connected to the corresponding pumps 42, 43 each through an inlet line 44, 45. The reservoirs 39, 40 are connected also to the corresponding connection lines 33, 34 each through a master-side line 46, 47 at a position close to the master cylinder 25 compared with the corresponding linear solenoid valve 35a, 35b. The pumps 42 and 43 are connected to connection points 50 and 51, respectively, each through a supply line 48, 49. Each of the connection points 50, 51 is arranged between the corresponding one of the pressure increasing valves 37a to 37d and the linear solenoid valve 35a, 35b in the associated one of the hydraulic circuits 29, 30. When the motor 41 rotates, each pump 42, 43 draws the brake fluid from the corresponding reservoir 39, 40 and the master cylinder 25 through the associated inlet line 44, 45 and a master-side line 46, 47. The pump 42, 43 then sends the brake fluid into the corresponding supply line 48, 49.

The brake ECU 55 (referred to also as the "electronic brake control unit"), which controls operation of the brake actuator 31, will hereafter be described.

As illustrated in Fig. 2, the engine speed sensor SE2 and the booster pressure sensor SE3 are electrically connected to the input interface of the brake ECU 55, which is an example of the vehicle control apparatus. Wheel speed sensors SE4, SE5, SE6, SE7 for detecting the wheel speed of the corresponding wheels FR, FL, RR, RL, an acceleration sensor (referred to as a "G sensor") SE8 for detecting the acceleration of the vehicle in the forward-rearward direction of the vehicle, and a brake switch SW1 for detecting whether the brake pedal 15 is being operated are electrically connected to the input interface of the brake ECU 55. The acceleration sensor SE8 outputs a signal having a positive value when the vehicle stops on a sloped road directed uphill and a signal having a negative value when the vehicle stops on a sloped road directed downhill.

The valves 35a, 35b, 37a to 37d, and 38a to 38d and the motor 41 are electrically connected to the output interface of the brake ECU 55. The brake ECU 55 is capable of sending and receiving various types of information through the ECUs including the engine ECU 17 and a bus 56.

The brake ECU 55 includes a digital computer configured by non-illustrated CPU, ROM, and RAM, non-illustrated valve driver circuits for driving the valves 35a, 35b, 37a to 37d, and 38a to 38d, and a non-illustrated motor driver circuit for driving the motor 41. The ROM of the digital computer memorizes various control processes (including a braking process for engine restart, which will be described below) and various threshold values in advance. The RAM stores various types of information that are rewritten as needed when a non-illustrated ignition switch of the vehicle is on.

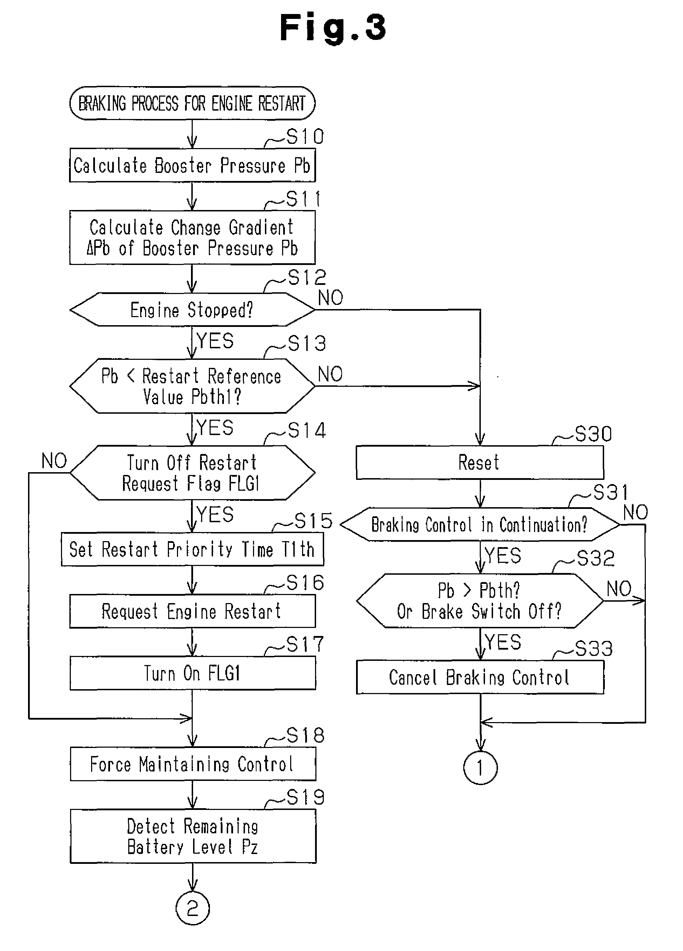

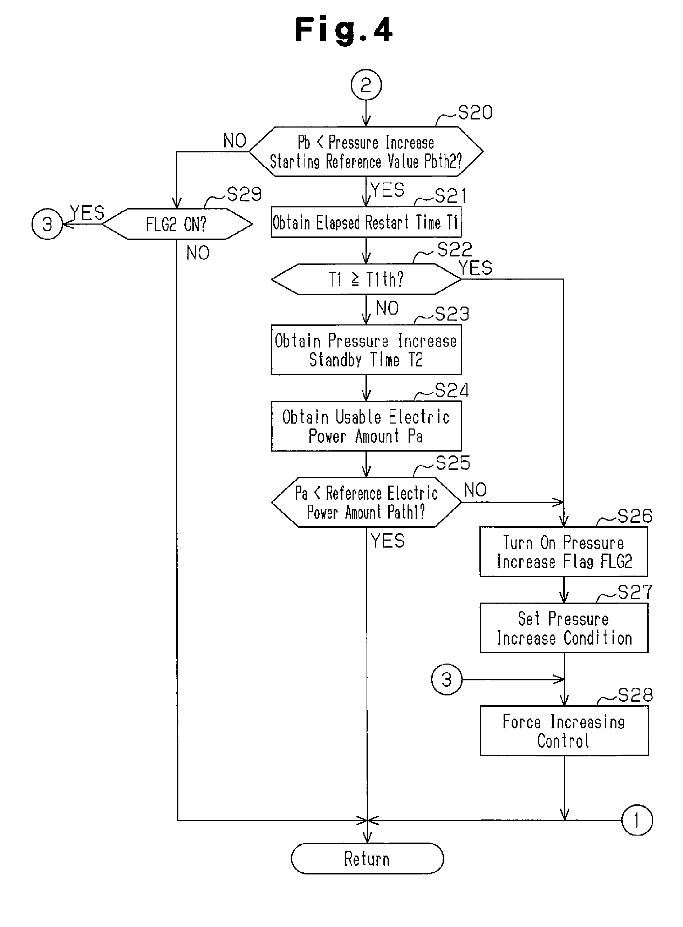

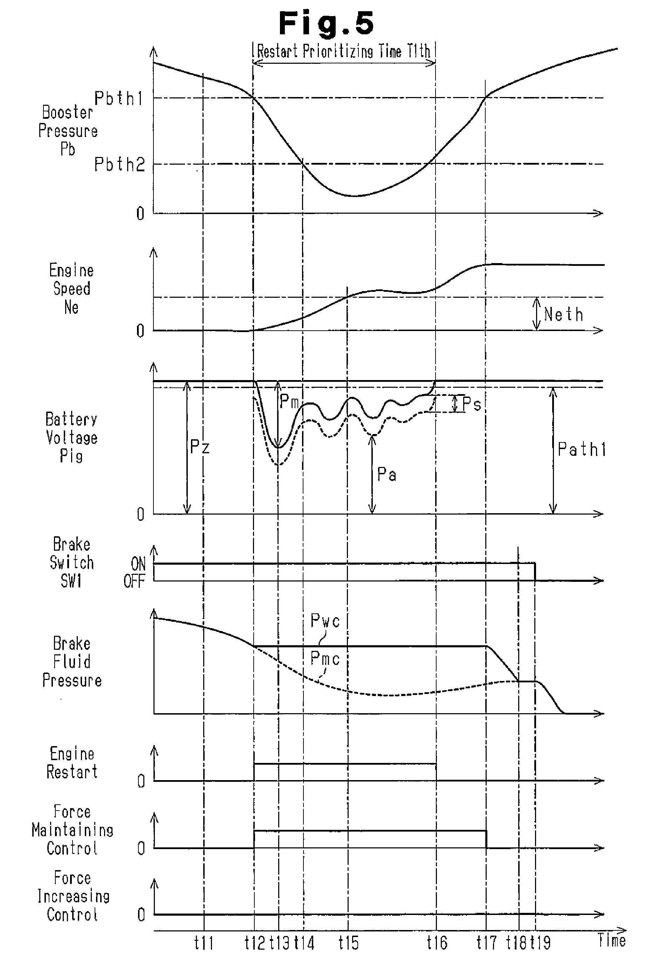

The brake ECU 55 of the first embodiment performs routines of various control processes, including the engine-restart braking process routine, which is carried out when the engine 12 is restarted after the engine 12 has been automatically stopped. The engine-restart braking process routine will hereafter be described with reference to the flowcharts of Figs. 3 and 4 and the timing chart of Fig. 5. In the first embodiment, the engine-restart braking process routine is performed to set the execution timing for braking controls (including force maintaining control and force increasing control) based on the booster pressure at the time of restarting the engine 12.

Specifically, the engine-restart braking process routine is performed at predetermined time intervals (for example, at 10 millisecond intervals) set in advance. In the engine-restart braking process routine, the brake ECU 55 calculates the booster pressure Pb using the detection signal from the booster pressure sensor SE3 (step S10). The brake ECU 55 then determines a time derivative of the calculated booster pressure Pb to obtain the change gradient ΔPb of the booster pressure Pb. In other words, in the first embodiment, the brake ECU 55 functions also as a change gradient obtaining section.

Subsequently, the brake ECU 55 determines whether the engine 12 is in a stopped state based on the engine speed Ne (see Fig. 5), which is detected from the detection signal from the engine speed sensor SE2 (step S12). For example, the brake ECU 55 determines that the engine 12 is in a stopped state when the engine speed Ne is less than a reference value Neth (see Fig. 5), which is slightly less than the engine idle speed. Alternatively, in step S12, the brake ECU 55 may request information for identifying the state of the engine 12 from the engine ECU 17. In this case, based on the information provided by the engine ECU 17 as a response to the request, the brake ECU 55 determines whether the engine 12 is in a stopped state or restart of the engine 12 has failed.

If the engine 12 is not in a stopped state (step S12: NO), the brake ECU 55 determines that the engine 12 is in operation or restart of the engine 12 has been successfully accomplished and performs step S30, which will be described below. In contrast, if the engine 12 is stopped (step S12: YES), the brake ECU 55 determines that restart of the engine 12 is not currently carried out or is being carried out. The brake ECU 55 then determines whether the booster pressure Pb, which is calculated in step S10, is less than a restart reference value Pbth1, which is set in advance (step S13). As the booster pressure Pb becomes closer to the atmospheric pressure, the maximum value of the braking force applied to each wheel FR, FL, RR, RL through braking operation by the driver becomes less. Accordingly, if the booster pressure Pb approaches the atmospheric pressure, it is preferable to restart the engine 12 to recover the booster pressure Pb. In the first embodiment, the restart reference value Pbth1 is set as the reference for determining whether restart of the engine 12 should be started.

If the booster pressure Pb is greater than or equal to the restart reference value Pbth1 (step S13: NO), the brake ECU 55 determines that sufficient braking force is applied to each wheel FR, FL, RR, RL through braking operation by the driver and performs step S30, which will be described below. In contrast, if the booster pressure Pb is less than the restart reference value Pbth1 (step S13: YES), the brake ECU 55 determines that sufficient braking force cannot be applied to the wheels FR, FL, RR, RL through braking operation by the driver and determines whether a restart request flag FLG1 is off (step S14). The restart request flag FLG1 is used to determine whether a request for restarting the engine 12 has been sent to the engine ECU 17.

When the restart request flag FLG1 is on (step S14: NO) and it is thus indicated that the request for restarting the engine 12 has been sent to the engine ECU 17, the brake ECU 55 carries out step S18, which will be described below. In contrast, if the restart request flag FLG1 is off (step S14: YES), the brake ECU 55 sets a restart prioritizing time T1th (step S15). Specifically, the restart prioritizing time T1th corresponds to the time period in which the electric power stored in a non-illustrated battery of the vehicle is consumed for the restart control of the engine 12 on a priority basis over the braking control of the braking device 16.

In the first embodiment, the restart prioritizing time T1th is set to be longer when the change gradient ΔPb of the booster pressure, which is calculated in step S11, is greater than when the change gradient ΔPb of the booster pressure is small. Specifically, if the change gradient ΔPb of the booster pressure is greater than or equal to a reference gradient value, which is set in advance, the brake ECU 55 determines that the change gradient ΔPb is great and sets the restart prioritizing time T1th to a reference prioritizing time (for example, three seconds), which is set in advance. The reference prioritizing time is set as the time equal to or slightly longer than the minimum time estimated as necessary for successfully accomplishing restart of the engine 12 if sufficient electric power is supplied to a non-illustrated starter motor mounted in the drive force generating device 13. In contrast, when the change gradient ΔPb of the booster pressure is less than the reference gradient value, the brake ECU 55 determines that the change gradient ΔPb is small and sets the reference prioritizing time to a value obtained by adding an allowance value (for example, two seconds), which is set in advance. In other words, in the first embodiment, the brake ECU 55 functions also as a time setting section.

Subsequently, the brake ECU 55 requests restart of the engine 12 to the engine ECU 17 (step S16). At this stage, the brake ECU 55 transmits the information for identifying the restart prioritizing time T1th, which is set in step S15, to the engine ECU 17. The brake ECU 55 then turns on the restart request flag FLG1 (step S17) and performs step S18, which is the subsequent step.

In step S18, the brake ECU 55 performs force maintaining control for maintaining the braking force applied to each wheel FR, FL, RR, RL. Specifically, the brake ECU 55 actuates the linear solenoid valves 35a, 35b to maintain the wheel cylinder pressures in the wheel cylinders 32a to 32d. In this state, the brake ECU 55 holds the linear solenoid valves 35a, 35b each in a closed state. That is, in the first embodiment, the brake ECU 55 functions also as a force maintaining control section. Subsequently, the brake ECU 55 performs step S19, which will be described below.

With reference to the timing chart of Fig. 5, changes of various parameters in the restart of the engine 12 performed due to a decrease of the booster pressure Pb will now be described.

At the first time point t11, the booster pressure Pb is greater than or equal to the restart reference value Pbth1 and the brake switch SW1 is on. The engine 12 is thus maintained in an automatically stopped state. Afterwards, as the booster pressure Pb gradually becomes closer to the atmospheric pressure with the brake switch SW1 held in an ON state, the master cylinder pressure Pmc and the wheel cylinder pressure Pwc are decreased in a manner following the booster pressure Pb. At the second time point t12, at which the booster pressure Pb becomes less than the restart reference value Pbth1, a condition for restarting the engine 12 is satisfied. The aforementioned starter motor is thus started to restart the engine 12. At this stage, the actuation time of the starter motor is equal to the restart prioritizing time T1th, which has been set by the brake ECU 55. In other words, the engine 12 cranks in the period from the second time point t12 to when the restart prioritizing time T1th comes to an end.

At the second time point t12, at which the restart of the engine 12 is started, the force maintaining control is initiated to maintain the braking force applied to each wheel FR, FL, RR, RL as the current value. At this stage, the linear solenoid valves 35a, 35b are closed. As a result, as long as the force maintaining control is continued after the second time point t12, the wheel cylinder pressure Pwc in each wheel cylinder 32a to 32d is maintained regardless of change of the booster pressure Pb and variation of the brake operating force applied by the driver. In contrast, the master cylinder pressure Pmc of the master cylinder 25 changes in correspondence with the change of the booster pressure Pb even when the brake operating force applied by the driver is unchanged.

There may be cases in which the linear solenoid valves 35a, 35b cannot be fully closed due to an assembly error caused in fabrication of the products. If the braking device 16 has such linear solenoid valves 35a, 35b, the wheel cylinder pressure Pwc may gradually drop, or, in other words, the braking force applied to each wheel FR, FL, RR, RL may gradually decrease, despite the execution of the force maintaining control. However, the speed at which the braking force gradually decreases is extremely small, compared with a case in which the linear solenoid valves 35a, 35b are maintained open.

In step S19, as illustrated in the flowcharts of Figs. 3 and 4, the brake ECU 55 detects a remaining battery level Pz of the aforementioned battery. The battery provides the electric power for driving the starter motor when the engine 12 is restarted. The remaining battery level Pz of the battery during the restart of the engine 12 is detected in step S19. Then, the brake ECU 55 determines whether the booster pressure Pb, which is calculated in step S10, is less than a pressure increase starting reference value (a force increase starting reference value) Pbth2, which is set in advance (step S20). The pressure increase starting reference value Pbth2 is set to a value less than the restart reference value Pbth1, which is a value close to the atmospheric pressure.

When the booster pressure Pb is less than the pressure increase starting reference value Pbth2 (step S20: YES), the brake ECU 55 determines that the decreased booster pressure Pb cannot ensure that sufficient braking force is applied to each wheel FR, FL, RR, RL solely through braking operation by the driver. Then, the brake ECU 55 obtains an elapsed restart time T1 as the time that has elapsed since the initiation of the restart of the engine 12 (step S21). In the first embodiment, the elapsed restart time T1 is the time that has elapsed from the time point at which the restart of the engine 12 is requested, which is the time at which step 16 is carried out.

Subsequently, the brake ECU 55 determines whether the obtained elapsed restart time T1 is longer than or equal to the restart prioritizing time T1th, which is set in step S15 (step S22). When the elapsed restart time T1 is longer than or equal to the restart prioritizing time T1th, the brake ECU 55 determines that the restart of the engine 12 has failed. In other words, in the first embodiment, it is determined that the restart of the engine 12 has failed when a positive determination is made in step S22 before a positive determination is made in step S12. If the elapsed restart time T1 is longer than or equal to the restart prioritizing time T1th (step S22: YES), the brake ECU 55 carries out step S26, which will be described below.

In contrast, when the elapsed restart time T1 is less than the restart prioritizing time T1th (step S22: NO), the brake ECU 55 obtains a pressure increase standby time T2 as the time that has elapsed from when the booster pressure Pb becomes less than the pressure increase starting reference time Pbth2 to the current point of time (step S23). In the first embodiment, the brake ECU 55 stops obtaining the pressure increase standby time T2 when the force increasing control is started. In other words, once the force increasing control is started, the pressure increase standby time T2 is maintained as the time that has elapsed from when the booster pressure Pb becomes less than the pressure increase starting reference value Tbth2 to when the force increasing control is started.

Then, the brake ECU 55 obtains a usable electric power amount Pa, which is the amount of the electric power usable by the braking device 16, based on the remaining battery level Pz detected in step S19 (step S24). Specifically, to restart the engine 12, electric power is consumed by other operations than the braking control by the braking device 16. The braking device 16 is thus not allowed to consume all of the electric power corresponding to the remaining battery level Pz, which is detected in step S19. Accordingly, the brake ECU 55 sets the usable electric power amount Pa as the value obtained by subtracting a set value Ps, which is set in advance, from the detected remaining battery level Pz. The set value Ps is set to a value equal to or slightly greater than the amount of the electric power that is estimated to be consumed by other operations than the restart of the engine 12 and the braking control by the braking device 16 during the engine 12. In the first embodiment, the brake ECU 55 functions also as an electric power amount obtaining section.

Subsequently, the brake ECU 55 determines whether the obtained usable electric power amount Pa is less than a reference electric power amount Path1, which is set in advance (step S25). The reference electric power amount Path1 is set as the reference for determining whether a specified voltage, which is set in advance, can be applied to the motor 41 of the braking device 16 to increase the wheel cylinder pressure Pwc. When the usable electric power amount Pa is less than the reference electric power amount Path1 (step S25: YES), the brake ECU 55 prohibits execution of the force increasing control, through which the braking force applied to each wheel FR, FL, RR, RL is increased, and suspends the engine-restart braking process routine. In contrast, if the usable electric power amount Pa is greater than or equal to the reference electric power amount Path1 (step S25: NO), the brake ECU 55 carries out the subsequent step of the process, which is step S26.

In step S26, the brake ECU 55 sets a pressure increase flag FLG2 to an ON state. The brake ECU 55 then sets pressure increase conditions for performing the force increasing control based on the pressure increase standby time T2, which is obtained in step S23 (step S27). In the first embodiment, the pressure increase speed of the wheel cylinder pressure Pwc (which is the speed at which the braking force applied to each wheel FR, FL, RR, RL is increased) and the pressure increase amount of the wheel cylinder pressure Pwc (the increase amount of the braking force) are set based on the pressure increase standby time T2. Specifically, the pressure increase speed is set to be greater when the pressure increase standby time T2 is great than when the pressure increase standby time T2 is small. The pressure increase amount is set to be greater when the pressure increase standby time T2 is great than when the pressure increase standby time T2 is small. That is, in the first embodiment, the brake ECU 55 functions also as a control content setting section. Afterwards, the brake ECU 55 performs the subsequent step of the process, which is step S28.

In step S28, the brake ECU 55 carries out the force increasing control based on the pressure increase conditions (the pressure increase speed and the pressure increase amount), which are set in step S27. Specifically, the brake ECU 55 maintains the linear solenoid valves 35a, 35b in the states that have been brought about in the force maintaining control (which are the closed states) and activates the motor 41 (the pumps 42, 43). In this state, the motor 41 is controlled in the manner corresponding to the set pressure increase conditions. That is, in the first embodiment, the brake ECU 55 functions also as a force increasing control section. Afterwards, the brake ECU 55 suspends the engine-restart braking process routine.

In contrast, when the booster pressure Pb is greater than or equal to the pressure increase starting reference value Pbth2 (step S20: YES), the brake ECU 55 determines whether the pressure increase flag FLG2 is on (step S29). In other words, in step S29, it is determined whether the force increasing control is in execution. When the pressure increase flag FLG2 is on (step S29: YES), the brake ECU 55 carries out step S28, which has been described above. In contrast, when the pressure increase flag FLG2 is off (step S29: NO), the brake ECU 55 suspends the engine-restart braking process routine.

In step S30, the brake ECU 55 performs a resetting process by turning off the flags FLG1, FLG2 and resetting the elapsed restart time T1 and the pressure increase standby time T2 to 0. Then, the brake ECU 55 determines whether the braking device 16 is currently executing the braking control, or, in other words, whether the force maintaining control or the force increasing control is currently in execution (step S31). If the braking control is not in execution (step S31: NO), the brake ECU 55 suspends the engine-restart braking process routine.

In contrast, if the braking control is in execution (step S31: YES), the brake ECU 55 determines whether a first condition that the booster pressure Pb, which was detected in step S10, exceeds the restart reference value Pbth1 or a second condition that the brake switch SW1 is turned off is satisfied (step S32). Each of the first condition and the second condition is a condition for ending the braking control. In other words, in step S32, it is determined whether either one of the conditions for ending the braking control is met.

If neither one of the conditions for ending the braking control is satisfied (step S32: NO) and it is thus indicated that the first and second conditions are both unsatisfied, the brake ECU 55 suspends the engine-restart braking process routine. In contrast, when either one of the condition for ending the braking control is met (step S32: YES) and it is thus indicated that the first condition or the second condition is satisfied, the brake ECU 55 carries out a process for canceling the braking control (step S33). Specifically, if the force maintaining control is in execution, the brake ECU 55 gradually reduces the amount of the electric power supplied to the linear solenoid valves 35a, 35b eventually to 0. If the force increasing control is in execution, the brake ECU 55 gradually decreases the amount of the electric power supplied to the linear solenoid valves 35a, 35b and suspends electric power supply to the motor 41. Afterwards, the brake ECU 55 suspends the engine-restart braking process routine.

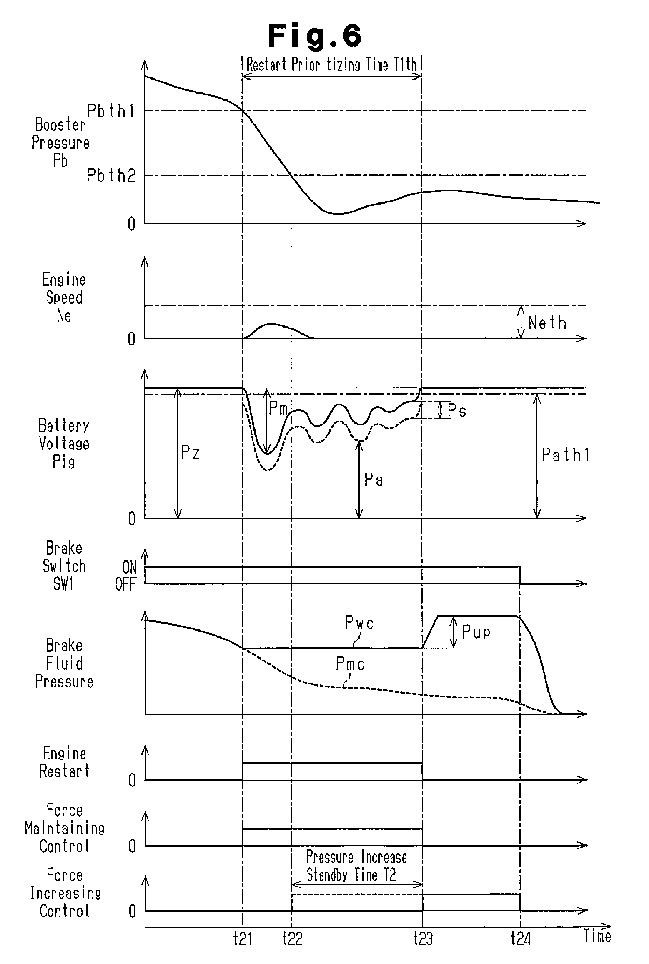

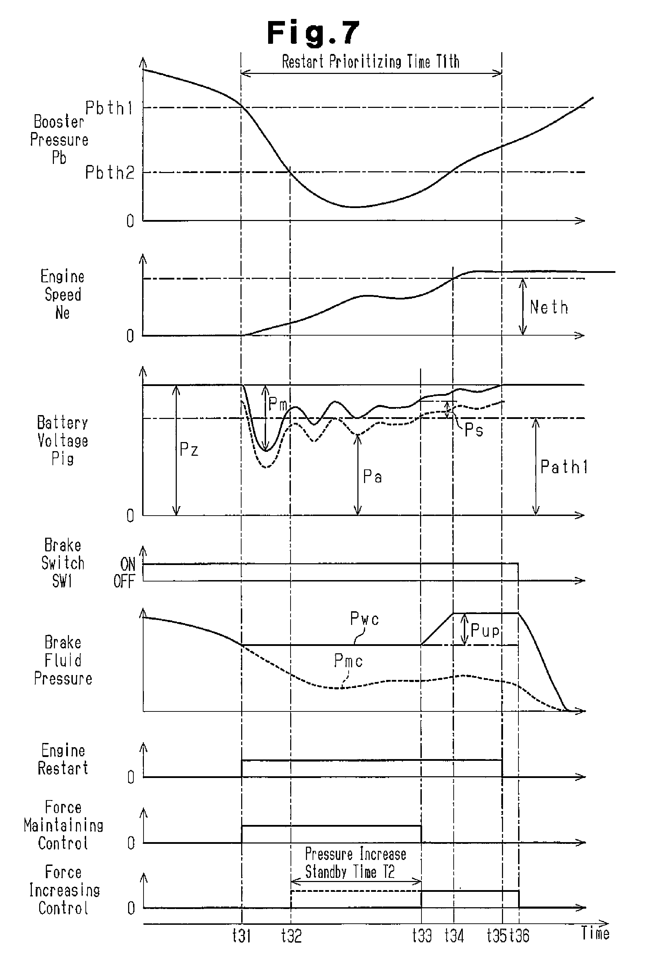

The operation after the restart of the engine 12 and the force maintaining control are started will hereafter be described. The timing chart of Fig. 5 represents a case in which the restart of the engine 12 is successfully accomplished and the usable electric power amount Pa at the time when the engine restart is successfully completed is less than the reference electric power amount Path1. The timing chart of Fig. 6 represents a case in which the restart of the engine 12 fails and the usable electric power amount Pa is less than the reference electric power amount Path1 in the time period in which the elapsed restart time T1 is less than the restart prioritizing time T1th. The timing chart of Fig. 7 represents a case in which the restart of the engine 12 is successfully accomplished and the usable electric power amount Pa becomes greater than or equal to the reference electric power amount Path1 in the time period in which the elapsed restart time T1 is less than the restart prioritizing time T1th.

The operation will hereinafter be described referring to Fig. 5.

When the restart of the engine 12 is started and the wheel cylinder pressure Pwc is maintained at the second time point t12, the electric power charged in the battery (hereinafter, referred to as the "battery electric power Pig") fluctuates in accordance with the amount of the electric power supplied to the starter motor. In this state, the electric power consumption Pm of the starter motor is maximized at the third time point t13 corresponding to the time point at which the starter motor is started due to, for example, inrush electric current at the time of starting the starter motor or inertia resistance by an engine rotating portion (such as the crankshaft). After the third time point t13, the electric power consumption Pm remains equal to or less than the electric power consumption at the third time point t13.

Then, at the fourth time point t14, the booster pressure Pb becomes less than the pressure increase starting reference value Pbth2. In this case, the insufficient booster pressure Pb may prevent the brake operating force applied by the driver from applying sufficient braking force to each wheel FR, FL, RR, RL. However, at this time point (at the fourth time point t14), the elapsed restart time T1, which is the time that has elapsed since the restart of the engine 12 is started, is less than the restart prioritizing time T1th and the usable electric power amount Pa is less than the reference electric power amount Path1. As a result, the battery electric power Pig is consumed by the restart of the engine 12 on a priority basis over the force increasing control. This ensures that the starter motor receives sufficient electric power.

At the fifth time point t15, at which the elapsed restart time T1 is less than the restart prioritizing time T1th, the engine speed Ne exceeds the reference value Neth. It is thus determined that the restart of the engine 12 has been successfully accomplished. However, at this time point, the brake switch SW1 is maintained in the ON state and the booster pressure Pb remains less than the restart reference value Pbth1. As a result, the force maintaining control is continuously carried out to maintain the wheel cylinder pressure Pwc.

Once the restart of the engine 12 is successfully accomplished, air is drawn into the engine 12 through the intake manifold and negative pressure is produced in the booster 26. This gradually increases the booster pressure Pb in the booster 26, which is connected to the intake manifold.

Afterwards, at the sixth time point t16, the elapsed restart time T1 becomes equal to the restart prioritizing time T1th and thus the control process for restarting the engine 12 is ended. In other words, the electric power supply to the starter motor is stopped at the sixth time point t16. However, at this time point, the brake switch SW1 is maintained in the ON state and the booster pressure Pb is maintained below the restart reference value Pbth1. As a result, the force maintaining control is continuously carried out to maintain the wheel cylinder pressure Pwc.

Then, at the seventh time point t17, the booster pressure Pb becomes greater than or equal to the restart reference value Pbth1. This ends the force maintaining control, thus gradually reducing the wheel cylinder pressure Pwc. At this time point, the brake pedal 15 is still being operated and thus the wheel cylinder pressure Pwc corresponds to the brake operating force applied by the driver. In other words, the wheel cylinder pressure Pwc is substantially equal to the master cylinder pressure Pmc (at the eighth time point t18). Afterward, at the ninth time point t19, at which the brake switch SW1 is turned off, the master cylinder pressure Pmc and the wheel cylinder pressure Pwc are decreased. This prevents the wheels FR, FL, RR, RL from receiving the braking force from the braking device 16.

The operation will now be described with reference to the timing chart of Fig. 6. The operation before the first time point t21 of Fig. 6, at which the restart of the engine 12 and the force maintaining control are started, is the same as the operation in the corresponding time period in the timing chart of Fig. 5. Description of the operation before the first time point t21 is thus omitted herein.

The restart of the engine 12 starts at the first time point t21 and then fails. Then, at the second timing t22, the booster pressure Pb becomes less than the pressure increase starting reference value Pbth2 and measurement of the pressure increase standby time T2 is started. At this time point, the elapsed restart time T1 is less than the restart prioritizing time T1th and the usable electric power amount Pa is less than the reference electric power amount Path1. The force increasing control is thus not yet started.

At the third time point t23, the elapsed restart time T1 becomes longer than or equal to the restart prioritizing time T1 and thus the process for restarting the engine 12 is suspended. Since the restart of the engine 12 has failed in this case, the booster pressure Pb remains less than the pressure increase starting reference value Pbth2. Accordingly, the pressure increase speed and the pressure increase amount Pup for the wheel cylinder pressure Pwc are set in correspondence with the pressure increase standby time T1, which is the time from the second time point t22 to the third time point t23. The braking control is then switched from the force maintaining control to the force increasing control. The force increasing control is thus carried out to increase the wheel cylinder pressure Pwc, thus increasing the braking force applied to each wheel FR, FL, RR, RL.

At the time point at which the force increasing control is started, the electric power supply to the starter motor for restarting the engine 12 is suspended. The battery electric power Pig is thus sufficient for allowing the braking device 16 to perform the force increasing control. This ensures appropriate execution of the force increasing control based on the set pressure increase speed and the set pressure increase amount Pup. In the force increasing control, the pumps 42, 43 stop when the wheel cylinder pressure Pwc is increased by the amount corresponding to the set pressure increase amount Pup.

Thereafter, at the fourth time point t24, the brake switch SW1 is turned off and the force increasing control is ended. This decreases the wheel cylinder pressure Pwc, thus preventing the wheels FR, FL, RR, RL from receiving braking force from the braking device 16.

The operation will hereafter be described with reference to the timing chart of Fig. 7. The operation before the first time point t31, at which the restart of the engine 12 and the force maintaining control are started, is the same as the operation in the corresponding time period in the timing charts of Figs. 5 and 6. Description of the operation before the first time point t31 is thus omitted herein.

The restart of the engine 12 and the force maintaining control are started at the first time point t31. Then, at the second timing t32, the booster pressure Pb becomes less than the pressure increase starting reference value Pbth2 and measurement of the pressure increase standby time T2 is started. At this time point, the elapsed restart time T1 is less than the restart prioritizing time T1th and the usable electric power amount Pa is less than the reference electric power amount Path1. The force increasing control is thus not yet started.

At the third time point t33, the process for restarting the engine 12 is in execution. However, despite the fact that the process for restarting the engine 12 is in continuation, the usable electric power amount Pa becomes greater than or equal to the reference electric power amount Path1. In other words, even during the electric power is supplied to the starter motor, the electric power charged in the battery is sufficient for allowing the braking device 16 to perform the force increasing control. Further, the engine speed Ne is less than the reference value Neth at the third time point t33 and thus the restart of the engine 12 is not yet determined to have been successfully accomplished. As a result, at the third time point t33, the braking control is switched from the force maintaining control to the force increasing control.

Then, the pressure increase speed and the pressure increase amount Pup for the wheel cylinder pressure Pwc are set in accordance with the pressure increase standby time T2, which is the time from the second time point t32 to the third time point t33. The force increasing control is then carried out to raise the wheel cylinder pressure Pw and increase the braking force applied to each wheel FR, FL, RR, RL.

Subsequently, at the fourth time point t34, the engine speed Ne becomes greater than or equal to the reference value Neth and it is thus determined that the restart of the engine 12 has been successfully accomplished. At the fifth time point t35, the elapsed restart time T1 becomes longer than or equal to the restart prioritizing time T1th and the electric power supply to the starter motor is suspended. At this time point, the booster pressure Pb is less than the restart reference value Pbth1 and the brake switch SW1 is held in the ON state. The force increasing control is thus continuously carried out.

Then, at the sixth time point t36, the brake switch SW1 is turned off and the force increasing control is ended. This decreases the wheel cylinder pressure Pwc, thus preventing the wheels FR, FL, RR, RL from receiving braking force from the braking device 16.

As has been described, the first embodiment has the advantages described below.
(1) When the booster pressure Pb approaches the atmospheric pressure compared with the restart reference value Pbth1 and the restart of the engine 12 is started, the braking device 16 carries out the force maintaining control. In other words, the braking force applied to each wheel FR, FL, RR, RL is prevented from decreasing when the engine 12 is being restarted. Further, the force maintaining control does not need activation of the pumps 42, 43 and correspondingly saves the electric power consumed by the braking device 16, compared with the electric power consumption in a case where the force increasing control is performed to raise the wheel cylinder pressure Pwc to increase the braking force applied to each wheel FR, FL, RR, RL. As a result, excessive electric power consumption by the vehicle is restricted when the engine 12 is restarted due to the decreased booster pressure Pb.
(2) The booster pressure Pb may gradually approach the atmospheric pressure even during the restart of the engine 12. In the first embodiment, the force increasing control is performed in some cases if the booster pressure Pb approaches the atmospheric pressure compared with the pressure increase starting reference value Pbth2, even if the pressure maintaining control is in execution during the restart of the engine 12. In these cases, the force increasing control is started with a delay with respect to the time point at which the process for restarting the engine 12 is started. In other words, the force increasing control is not performed in the initial period of the engine restart control in which the electric power consumption is maximum (for example, the period from the first time point t31 to the second time point t32 in Fig. 7). As a result, excessive electric power consumption by the vehicle is restricted when the booster pressure Pb drops and thus the restart of the engine 12 is started.
(3) If the elapsed restart time T1 since the initiation of the restart of the engine 12 is less than the restart prioritizing time T1th, the restart of the engine 12, which is recovering the booster pressure Pb, is carried out on a priority basis over increasing the braking force applied to each wheel FR, FL, RR, RL. This prevents the process for restarting the engine and the force increasing control from being carried out simultaneously or shortens the time in which the engine restarting process and the force increasing control are performed simultaneously.
(4) During the restart of the engine 12, the maximum braking force applied to each wheel FR, FL, RR, RL through braking operation by the driver is smaller when the change gradient ΔPb of the booster pressure is great than when the change gradient ΔPb is small. The restart prioritizing time T1th is thus set to a shorter time when the change gradient ΔPb is great than when the change gradient ΔPb is small. This allows the force increasing control to be started in a short time.
(5) In contrast, during the restart of the engine 12, the maximum braking force applied to each wheel FR, FL, RR, RL through braking operation by the driver is greater when the change gradient ΔPb is small than when the change gradient ΔPb is great. The restart prioritizing time T1th is thus set to be longer when the change gradient ΔPb is small than when the change gradient ΔPb is great. This prolongs the time in which the electric power charged in the battery is consumed to restart the engine 12 on a priority basis, thus improving the success rate of the restart of the engine 12.
(6) In the first embodiment, the booster pressure Pb cannot be recovered if the restart of the engine 12 fails. The braking control is thus switched from the force maintaining control to the force increasing control after the process for restarting the engine 12 is ended or when the process is in execution. In contrast, if the restart of the engine 12 is successfully accomplished, the force increasing control is not performed unless the usable electric power amount Pa becomes greater or equal to the reference electric power amount Path1 in the time period in which the elapsed restart time T1 is less than the restart prioritizing time T1th. This decreases the electric power consumed by the vehicle in the restart of the engine 12, compared with the electric power consumed in a case in which the force increasing control is carried out regardless of the usable electric power amount Pa even when the restart of the engine 12 is successfully accomplished.
(7) In the first embodiment, when the usable electric power amount Pa is greater than or equal to the reference electric power amount Path1 during the restart of the engine 12, it is determined that the remaining battery level of the battery is maintained without falling short even if the force increasing control is executed. In other words, the force increasing control is performed if the following conditions are all satisfied: the condition that the booster pressure Pb is less than the pressure increase starting reference value Pbth2; the condition that the restart of the engine 12 has not yet been determined to have been successfully accomplished; and the condition that the battery maintains a sufficient electric power charge for performing the force increasing control. This rapidly increases the braking force applied to each wheel FR, FL, RR, RL compared with a case in which the force increasing control is started after the process for restarting the engine 12 is completed.
(8) When the force increasing control is carried out, the pumps 42, 43 are controlled based on the control content (the pressure increase speed and the pressure increase amount Pup) that are set in correspondence with the time that has elapsed from when the booster pressure Pb approaches the atmospheric pressure compared with the pressure increase starting reference value Pbth2 to when the force increasing control is started (which is the pressure increase standby time T2). If it is desired to increase the braking force rapidly, for example, the pressure increase speed is set to a high value and the pressure increase amount Pup is set to a great value. In this manner, when the vehicle is stopped on a sloped road surface, unintentional movement (roll back) of the vehicle caused by decrease of the booster pressure Pb is unlikely to happen or the amount of such movement is restricted.
   In contrast, when a rapid increase of the braking force is not desired, for example, the pressure increase speed is set to a low value and the pressure increase amount Pup is set to a small value. This decreases the electric power consumed by the braking device 16 to carry out the force increasing control, compared with a case in which the same control content is employed regardless of the pressure increase standby time T2.
(9) In the first embodiment, distribution of the battery electric power Pig is adjusted such that the process for restarting the engine 12 and the force increasing control are not performed simultaneously or are carried out simultaneously only for an extremely short period of time. As a result, if the vehicle employs a battery charged with a comparatively small amount of electric power, the engine 12 is restarted and the force increasing control is carried out appropriately through execution of the routine of the above-described engine-restart braking process. If the vehicle uses a battery with a comparatively large amount of charged electric power, the engine-restart braking process routine is performed to avoid instantaneous excessive consumption of the electric power by the vehicle.

### Second Embodiment

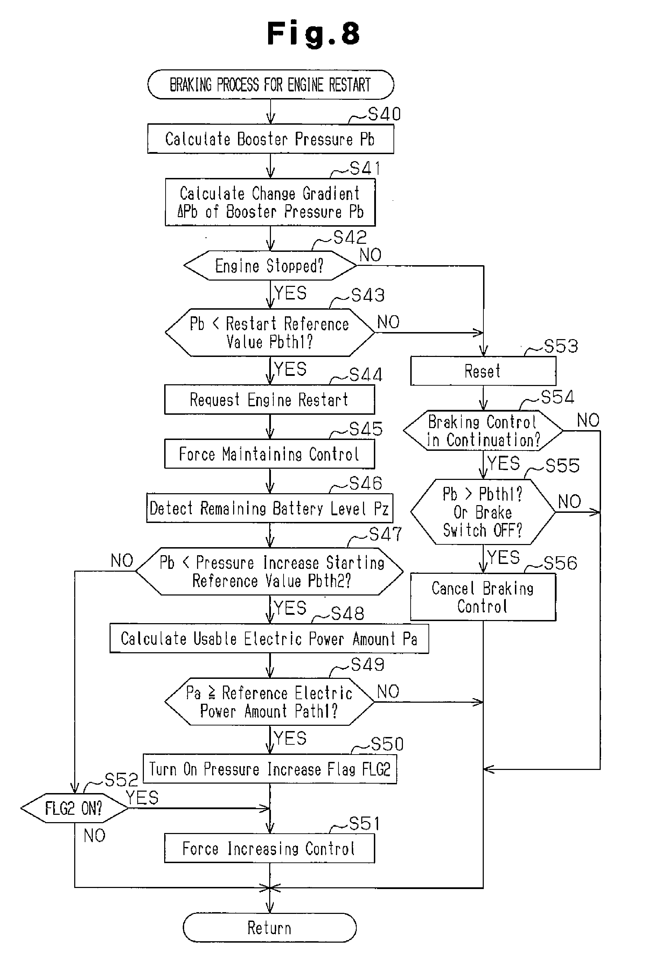

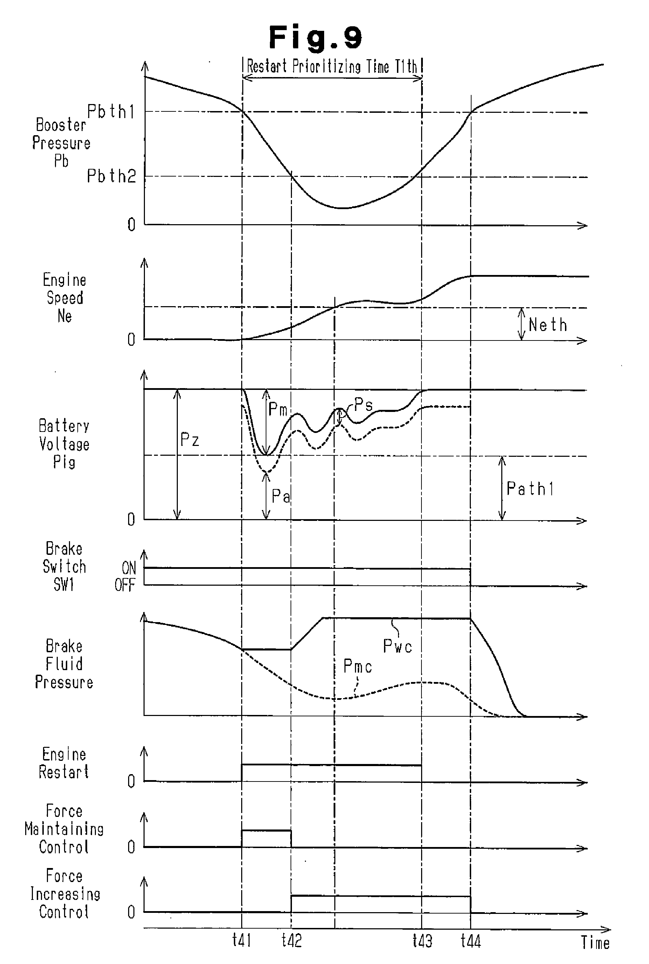

A second embodiment of the present invention will now be described with reference to Figs. 8 and 9. A part of the content of the engine-restart braking process routine in the second embodiment is different from the corresponding part of the routine content of the aforementioned process in the first embodiment. Accordingly, the description below is focused on the difference between the first and second embodiments. The same or like reference numerals are given to components of the second embodiment that are the same as or like corresponding components of the first embodiment and repeated description thereof is omitted herein.

The engine-restart braking process routine of the second embodiment will hereafter be described with reference to the flowchart of Fig. 8.

In the engine-restart braking process routine, the brake ECU 55 sequentially carries out steps S40, S41, and S42, which are the same as steps S10, S11, and S12, respectively, of the first embodiment. If the engine 12 is not stopped (step S42: NO), the brake ECU 55 performs step S53, which will be described below. In contrast, when the engine 12 is stopped (step S42: YES), the brake ECU 55 determines whether the booster pressure Pb calculated in step S40 is less than the restart reference value Pbth1 (step S43).

When the booster pressure Pb is greater than or equal to the restart reference value Pbth1 (step S43: NO), the brake ECU 55 carries out step S53, which will be described below. In contrast, if the booster pressure Pb is less than the restart reference value Pbth1 (step S43: YES), the brake ECU 55 requests restart of the engine 12 from the engine ECU 17 (step S44). Subsequently, the brake ECU 55 executes the force maintaining control (step S45) and detects the remaining battery level Pz of the battery (step S46). That is, in the second embodiment, the brake ECU 55 functions also as a force maintaining control section.

Then, if the booster pressure Pb calculated in step S40 is less than the pressure increase starting reference value (the force increase starting reference value) Pbth2 (step 47: YES), the brake ECU 55 obtains the usable electric power amount Pa (step S48). If the obtained usable electric power amount Pa is greater than or equal to the reference electric power amount Path1 (step S49: YES), the brake ECU 55 turns on the pressure increase flag FLG2 (step S50), carries out the force increasing control (step S51), and suspends the engine-restart braking process routine. In other words, in the second embodiment, the brake ECU 55 functions also as a force increasing control section.

In contrast, when the usable electric power amount Pa is less than the reference electric power amount Path1 (step S49: NO), the brake ECU 55 suspends the engine-restart braking process routine without carrying out the force increasing control.

In contrast, if the booster pressure Pb is greater than or equal to the pressure increase starting reference value Pbth2 (step S47: NO) and the pressure increase flag FLG2 is on (step S52: YES), the brake ECU 55 performs the force increasing control (step S51) and suspends the engine-restart braking process routine. When the pressure increase flag FLG2 is off (step S52: NO), the brake ECU 55 suspends the engine-restart braking process routine even if a negative determination is made in step S47.

In step S53, the brake ECU 55 carries out the resetting process, which is similar to the resetting process of step S30. The brake ECU 55 then performs steps S54, S55, and S56, which are similar to the aforementioned steps S31, S32, and S33, respectively. Subsequently, the brake ECU 55 suspends the engine-restart braking process routine.

The operation after the restart of the engine 12 and the force maintaining control are started will hereafter be described with reference to the timing chart of Fig. 9. The timing chart of Fig. 9 represents a case in which the restart of the engine 12 is successfully accomplished.

At the first time point t41, the restart of the engine 12 and the force maintaining control are started. At the second time point t42, at which the booster pressure Pb becomes less than the pressure increase starting reference value Pbth2, the usable electric power amount Pa is greater than or equal to the reference electric power amount Path1. Accordingly, at the second time point t42, the braking control is switched from the force maintaining control to the force increasing control.

At the third time point t43, at which the process for restarting the engine 12 is ended, the booster pressure Pb is less than the restart reference value Pbth1 and the brake switch SW1 is maintained in the ON state. The force increasing control is thus continuously carried out. Later, at the fourth time point t44, the brake switch SW1 is turned off and the force increasing control is ended. This decreases the wheel cylinder pressure Pwc, thus preventing the braking device 16 from applying braking force to the wheels FR, FL, RR, RL.

As has been described, the second embodiment has the advantages described below in addition to the advantages similar to the advantages (1) and (2) of the first embodiment.
(10) During the restart of the engine 12, the force increasing control is started when the usable electric power amount Pa is greater than or equal to the reference electric power amount Path1 and the booster pressure Pb approaches the atmospheric pressure compared with the pressure increase starting reference value Pbth2. Through the force increasing control, the braking force applied to each wheel FR, FL, RR, RL is increased even when the booster 26 cannot sufficiently boost the brake operating force.
(11) If the usable electric power amount Pa is less than the reference electric power amount Path1 during the restart of the engine 12, the force increasing control is not performed even when the booster pressure Pb approaches the atmospheric pressure compared with the reference pressure increase stating value Pbth2. This restricts increase of the electric power consumed by the vehicle.
(12) In the second embodiment, the restart of the engine 12 and the force increasing control are executed simultaneously for a prolonged time compared with the first embodiment. The engine-restart braking process routine of the second embodiment is thus suitable for a vehicle having a battery with a comparatively high remaining battery level. That is, since the force increasing control is quickly started during the restart of the engine 12, unintentional movement of the vehicle is unlikely to happen in the restart of the engine 12 or the amount of such movement is minimized.

The illustrated embodiments may be modified to the forms described below.

In the second embodiment, the force increasing control may be performed each time the booster pressure Pb approaches the atmospheric pressure compared with the pressure increase starting reference value Pbth2 during the restart of the engine 12. However, when the usable electric power amount Pa is less than the reference electric power amount Path1, it is preferable to actuate the pumps 42, 43 in such a range that the electric power consumed by the braking device 16 does not exceed the usable electric power amount Pa. In this case, the pressure increase speed of the wheel cylinder pressure Pwc is smaller when the usable electric power amount Pa is small than when the usable electric power amount Pa is great.

This configuration rapidly increases the braking force applied to each wheel FR, FL, RR, RL when the usable electric power amount is less than the reference electric power amount, compared with a case in which the force increasing control is performed only after the process for restarting the engine 12 is ended. Further, the pumps 42, 43 are controlled in such a range that the electric power consumed by the braking device 16 does not exceed the usable electric power amount Pa. This restricts excessive electric power consumption by the vehicle and increases the braking force applied to the wheels FR, FL, RR, RL.

In the second embodiment, even after the force increasing control is started during the restart of the engine 12, the braking control may be switched from the force increasing control to the force maintaining control if the restart of the engine 12 is determined to have been successfully accomplished. When it is determined that the restart of the engine 12 has been successfully accomplished, the braking control may be ended. The booster pressure Pb is recovered through the successfully accomplished restart of the engine 12. The brake fluid pressure increased by the brake operating force applied by the driver is thus transmitted to the wheel cylinders 32a to 32d through the linear solenoid valves 35a, 35b, which remain open after the end of the control, and through the check valves 60a, 60b, which are arranged in parallel with the linear solenoid valves 35a, 35b when the force maintaining control is in execution. As a result, sufficient braking force is applied to the wheels FR, FL, RR, RL.

In the first embodiment, when the force increasing control is performed after the booster pressure Pb becomes less than the pressure increase starting reference value Pbth2, the pressure increase amount Pup of the wheel cylinder pressure Pwc may be set be greater when the pressure increase standby time T2 is long than when the pressure increase standby time T2 is short, while maintaining the pressure increase speed at a constant value regardless of the length of the pressure increase standby time T2.

In the first embodiment, when the force increasing control is performed after the booster pressure Pb becomes less than the pressure increase starting reference value Pbth2, the pressure increase speed of the wheel cylinder pressure Pwc may be set to be greater when the pressure increase standby time T2 is long than when the pressure increase standby time T2 is short. In this case, the pressure increase amount Pup is maintained as a constant value regardless of the length of the pressure increase standby time T2.

In the first embodiment, when the force increasing control is performed after the booster pressure Pb becomes less than the pressure increase starting reference value Pbth2, the pressure increase speed and the pressure increase amount Pup of the wheel cylinder pressure Pwc may be set to constant values regardless of the length of the pressure increase standby time T2.

During the restart of the engine 12 in the first embodiment, the force increasing control may be performed to actuate the pumps 42, 43 in such a range that the electric power consumed by the braking device 16 does not exceed the usable electric power amount Pa if the following conditions are satisfied: the condition that the booster pressure Pb is less than the pressure increase starting reference value Pbth2, the condition that the usable electric power amount Pa is less than the reference electric power amount Path1, and the condition that the restart of the engine 12 has not yet been determined to have been successfully accomplished. In this case, the pressure increase speed of the wheel cylinder pressure Pwc becomes greater as the usable electric power amount Pa at that point becomes greater.

In the first embodiment, when the elapsed restart time T1 becomes greater than or equal to the restart prioritizing time T1th, the braking control may be switched from the force maintaining control to the force increasing control regardless of whether the restart of the engine 12 has been successfully accomplished or has failed.

In the first embodiment, the restart prioritizing time T1th may be set to a smaller value as the change gradient ΔPb of the booster pressure becomes greater. For example, the restart prioritizing time T1th may be set using linear function or quadratic function with the change gradient ΔPb employed as a parameter.

In the first embodiment, the allowance value may be set to a greater value as the difference between the change gradient ΔPb of the booster pressure and the reference gradient value becomes greater.

In the first embodiment, the restart prioritizing time T1th may be set to a constant value regardless of the change gradient ΔPb of the booster pressure.

In the first embodiment, if the elapsed restart time T1 is less than the restart prioritizing time T1th, the force increasing control may be prohibited regardless of the usable electric power amount Pa.

In the illustrated embodiments, the elapsed restart time T1 may be the time elapsed from when the brake ECU 55, after requesting the restart of the engine 12 from the brake ECU 55, receives the information that the process for restarting the engine 12 has been started from the engine ECU 17.

In the force increasing control performed in the illustrated embodiments, at least one of the pressure increase speed and the pressure increase amount Pup of the wheel cylinder pressure Pwc may be changed based on the wheel speed or the wheel acceleration of each wheel FR, FL, RR, RL. For example, the pressure increase speed may be set to be higher when the wheel speed or the wheel acceleration is great than when the wheel speed or the wheel acceleration is small. Alternatively, the pressure increase amount Pup may be set to be greater when the wheel speed or the wheel acceleration is great than when the wheel speed or the wheel acceleration is small. In these cases, the braking force applied to the wheels FR, FL, RR, RL is rapidly increased when the vehicle travels at a high speed or decelerates rapidly.

In the force increasing control carried out in the illustrated embodiments, at least one of the pressure increase speed and the pressure increase amount Pup of the wheel cylinder pressure Pwc may be changed according to the gradient of the road surface on which the vehicle is located. For example, the pressure increase speed may be set to be higher when the road surface gradient is great than when the road surface gradient is small. Alternatively, the pressure increase amount Pup may be set to greater when the road surface gradient is great than when the road surface gradient is small.

To obtain the road surface gradient, the two methods described below may be employed. In the first method, the time derivative of the vehicle speed (referred to also as the "vehicle speed derivative"), which is calculated based on detection signals from the wheel speed sensors SE4 to SE7, is determined. Then, the difference between the time derivative and the acceleration (referred to as the "G sensor value"), which is calculated based on a detection signal from the accelerator sensor SE8, is determined. The road surface gradient is then estimated based on the determined difference. In the second method, information regarding the road surface gradient is obtained using an information processing device (which is, for example, a navigation device), which is mounted in the vehicle.

In the illustrated embodiments, the restart reference value Pbth1 and the pressure increase starting reference value Pbth2 may be set to be greater when the gradient of the road surface on which the vehicle is located is great than when the gradient is small.

If an electric parking brake is mounted in the vehicle in the illustrated embodiments, the braking force applied to each wheel may be increased using the electric parking brake when the force increasing control is carried out. In this case, both the brake actuator 31 and the electric parking brake may be activated or the brake actuator 31 may be maintained without being actuated. In this case, the electronic control unit for controlling the electric parking brake functions as a force increasing control section.

The technical ideas obtainable from the above illustrated embodiments and the modified embodiments other than those disclosed in the claim section will now be described below with their advantages.
(1) The vehicle control apparatus according to claim 6, characterized in that the force increasing control section (55, S28, S51) performs the force increasing control to drive the braking device (16) in such a range that the amount of the electric power consumed by the braking device (16) does not exceed the usable electric power amount (Pa) obtained by the electric power amount obtaining section (55, S24, S48) when the following conditions are met:
   that the usable electric power amount (Pa) obtained by the electric power obtaining section (55, S24, S48) during the restart of the engine (12) is less than the reference electric power amount (Path1); and
   that the negative pressure (Pb) in the booster (26) approaches the atmospheric pressure compared with the force increase starting reference value (Pbth2).
   In the configuration described above, if the usable electric power amount obtained during the restart of the engine is less than the reference electric power amount and the negative pressure in the booster approaches the atmospheric pressure compared with the force increase starting reference value, the braking force applied to the wheels is increased in such a range that the amount of the electric power consumed by the braking device does not exceed the usable electric power amount. This restricts excessive electric power consumption by the vehicle and increases the braking force applied to the wheels.
(2) The vehicle control apparatus characterized in that the electric power obtaining section (55, S24, S48) obtains the amount of the electric power charged by a battery mounted in the vehicle as a remaining battery level (Pz) and obtains a usable electric power amount (Pa) based on the remaining battery level (Pz).
(3) The vehicle control apparatus characterized in that
   the braking device (16) includes a pressure difference adjustment valve (35a, 35b) actuated to adjust the pressure difference between the brake fluid pressure (Pmc) in the master cylinder (25) and the brake fluid pressure (Pwc) in the wheel cylinder (32a, 32b, 32c, 32d) and a pump (42, 43) activated to supply brake fluid into the wheel cylinder (32a, 32b, 32c, 32d),
   the force maintaining control maintains the pressure in the wheel cylinder (32a, 32b, 32c, 32d) by actuating the pressure difference adjustment valve (35a, 35b), and
   the force increasing control increases the pressure in the wheel cylinder (32a, 32b, 32c, 32d) by activating the pressure difference adjustment valve (35a, 35b) and the pump (42, 43) together.

## Claims

1. A vehicle control apparatus mounted in a vehicle having a braking device (16), wherein
the braking device (16) causes a booster (26) to increase brake operating force produced by a driver by using negative pressure (Pb) generated through operation of an engine (12), thereby producing brake fluid pressure (Pmc, Pwc) corresponding to the increased brake operating force in a master cylinder (25) and a wheel cylinder (32a, 32b, 32c, 32d) and applying braking force corresponding to the brake fluid pressure (Pwc) in the wheel cylinder (32a, 32b, 32c, 32d) to a wheel (FR, FL, RR, RL),
the vehicle control apparatus automatically stops and restarts the engine (12),
the vehicle control apparatus comprising a force maintaining control section (55, S18, S45) that carries out force maintaining control to maintain the braking force applied to the wheel (FR, FF, RR, RL) when engine restart is initiated due to approach of the negative pressure (Pb) in the booster (26) obtained when the engine (12) is not running to the atmospheric pressure compared with a restart reference value (Pbth1), which is set as a reference for determining whether the engine (12) should be restarted;
the vehicle control apparatus being **characterized by** a force increasing control section (55, S28, S51) that performs force increasing control for increasing the braking force applied to the wheel (FR, FL, RR, RL) when the negative pressure (Pb) in the booster (26) obtained during the restart of the engine (12) approaches the atmospheric pressure compared with a force increase starting reference value (Pbth2), which is closer to the atmospheric pressure than the restart reference value (Pbth1).

2. The vehicle control apparatus according to claim 1, **characterized in that** when the elapsed time (T1) since the initiation of the restart of the engine (12) is less than a restart prioritizing time (T1th), which is set for causing the restart of the engine (12) to be performed on a priority basis over the force increasing control, the force increasing control section (55, S28) does not carry out the force increasing control.

3. The vehicle control apparatus according to claim 2, **characterized by**:
a change gradient obtaining section (55, S11) that obtains the change gradient (ΔPb) of the negative pressure (Pb) in the booster (26) at the restart of the engine (12); and
a time setting section (55, S15) that sets the restart prioritizing time (T1th) to a shorter time when the obtained change gradient (ΔPb) is great than when the obtained change gradient (ΔPb) is small.

4. The vehicle control apparatus according to claim 2 or 3, **characterized in that**, in a case in which the elapsed time (T1) since the initiation of the restart of the engine (12) is longer than or equal to the restart prioritizing time (T1th), the force increasing control section (55, S28) does not perform the force increasing control if the engine (12) has been restarted, but carries out the force increasing control if the engine (12) has not been restarted and the negative pressure (Pb) in the booster (26) approaches the atmospheric pressure compared with the force increase starting reference value (Pbth2).

5. The vehicle control apparatus according to any one of claims 1 to 4, **characterized by** an electric power amount obtaining section (55, S24, S48) that obtains, as a usable electric power amount (Pa), the amount of the electric power that is consumable by the braking device (16) at the restart of the engine (12), wherein
the force increasing control section (55, S28, S51) performs the force increasing control when the following conditions are met:
that the usable electric power amount (Pa) obtained by the electric power amount obtaining section (55, S24, S48) during the restart of the engine (12) is greater than or equal to a reference electric power amount (Path1) set as a reference for determining whether execution of the force increasing control should be permitted, and
that the negative pressure (Pb) in the booster (26) approaches the atmospheric pressure compared with the force increase starting reference value (Pbth2).

6. The vehicle control apparatus according to claim 4, **characterized by** a control content setting section (55, S27) that sets at least one of an increase speed and an increase amount of the braking force applied to the wheel (FR, FL, RR, RL) based on an elapsed time (T2) from when the negative pressure (Pb) in the booster (26) obtained during the restart of the engine (12) approaches the atmospheric pressure compared with the force increase starting reference value (Pbth2) to when the force increasing control is started by the force increasing control section (55, S28),
wherein, when performing the force increasing control, the force increasing control section (55, S28) controls the braking device (16) based on the content set by the control content setting section (55, S27).

7. The vehicle control apparatus according to claim 5, **characterized in that**, when the usable electric power amount (Pa) obtained by the electric power amount obtaining section (55, S24, S48) during the restart of the engine (12) is less than the reference electric power amount (Path1), the force increasing control section (55, S28, S51) does not perform the force increasing control.

## Patentansprüche

1. Fahrzeugsteuergerät, das in einem Fahrzeug, das eine Bremsvorrichtung (16) hat, montiert ist, wobei
die Bremsvorrichtung (16) verursacht, dass ein Verstärker (26) eine von einem Fahrer erzeugte Bremsbetätigungskraft erhöht, indem sie einen Unterdruck (Pb) verwendet, der durch einen Betrieb eines Verbrennungsmotors (12) erzeugt wird, wobei dadurch ein Bremsfluiddruck (Pmc, Pwc) erzeugt wird, der der erhöhten Bremsbetätigungskraft in einem Hauptbremszylinder (25) und einem Radzylinder (32a, 32b, 32c, 32d) entspricht, und eine Bremskraft auf ein Rad (FR, FL, RR, RL) aufgebracht wird, die dem Bremsfluiddruck (Pwc) in dem Radzylinder (32a, 32b, 32c, 32d) entspricht, wobei
das Fahrzeugsteuergerät den Verbrennungsmotor (12) automatisch stoppt und neu startet, und
das Fahrzeugsteuergerät einen Krafterhaltungssteuerungsabschnitt (55, S18, S45) enthält, der eine Krafterhaltungssteuerung durchführt, um die Bremskraft, die auf das Rad (FR, FF, RR, RL) aufgebracht wird, zu erhalten, wenn aufgrund einer Annäherung des Unterdrucks (Pb) in dem Verstärker (26), der erhalten wird, wenn der Verbrennungsmotor (12) nicht läuft, an den Atmosphärendruck bei Vergleich mit einem Neustartreferenzwert (Pbth1), der als eine Referenz zum Bestimmen, ob der Verbrennungsmotor (12) neu gestartet werden sollte, eingestellt ist, ein Verbrennungsmotorneustart eingeleitet wird;
wobei das Fahrzeugsteuergerät **gekennzeichnet ist durch**
einen Krafterhöhungssteuerungsabschnitt (55, S28, S51), der eine Krafterhöhungssteuerung zum Erhöhen der Bremskraft, die auf das Rad (FR, FL, RR, RL) aufgebracht wird, durchführt, wenn der Unterdruck (Pb) in dem Verstärker (26), der während des Neustarts des Verbrennungsmotors (12) erhalten wird, sich dem Atmosphärendruck annähert und dabei mit einem Krafterhöhungsstartreferenzwert (Pbth2) verglichen wird, der näher an dem Atmosphärendruck als der Neustartreferenzwert (Pbth1) ist.

2. Fahrzeugsteuergerät nach Anspruch 1, **dadurch gekennzeichnet, dass**, wenn die seit dem Einleiten des Neustarts des Verbrennungsmotors (12) verstrichene Zeit (T1) geringer als eine Neustartpriorisierungszeit (T1th) ist, die zum Bewirken des Neustarts des Verbrennungsmotors (12) eingestellt ist, um auf einer Prioritätsgrundlage über der Krafterhöhungssteuerung durchgeführt zu werden, der Krafterhöhungssteuerungsabschnitt (55, S28) die Krafterhöhungssteuerung nicht durchführt.

3. Fahrzeugsteuergerät nach Anspruch 2, **gekennzeichnet durch**
einen Änderungsgradientenerhaltungsabschnitt (55, S11), der den Änderungsgradienten (ΔPb) des Unterdrucks (Pb) in dem Verstärker (26) bei dem Neustart des Verbrennungsmotors (12) erhält; und
einen Zeiteinstellungsabschnitt (55, S15), der die Neustartpriorisierungszeit (T1th) auf eine kürzere Zeit einstellt, wenn der erhaltene Änderungsgradient (ΔPb) groß ist, als wenn der erhaltene Änderungsgradient (ΔPb) klein ist.

4. Fahrzeugsteuergerät nach Anspruch 2 oder 3, **dadurch gekennzeichnet, dass** in einem Fall, in dem die seit dem Einleiten des Neustarts des Verbrennungsmotors (12) verstrichene Zeit (T1) länger als oder gleich der Neustartpriorisierungszeit (T1th) ist, der Krafterhöhungssteuerungsabschnitt (55, S28) die Krafterhöhungssteuerung nicht durchführt, falls der Verbrennungsmotor (12) neu gestartet worden ist, sondern die Krafterhöhungssteuerung ausführt, falls der Verbrennungsmotors (12) nicht neu gestartet worden ist und sich der Unterdruck (Pb) in dem Verstärker (26) dem Atmosphärendruck annähert und dabei mit dem Krafterhöhungsstartreferenzwert (Pbth2) verglichen wird.

5. Fahrzeugsteuergerät nach einem der Ansprüche 1 bis 4, **gekennzeichnet durch** einen Erhaltungsabschnitt eines elektrischen Energiebetrags (55, S24, S48), der als einen nutzbaren elektrischen Energiebetrag (Pa) den Betrag der elektrischen Energie erhält, der mittels der Bremsvorrichtung (16) bei dem Neustart des Verbrennungsmotors (12) verbrauchbar ist, wobei
der Krafterhöhungssteuerungsabschnitt (55, S28, S51) die Krafterhöhungssteuerung durchführt, wenn die folgenden Bedingungen erfüllt sind:
dass der nutzbare elektrische Energiebetrag (Pa), der mittels des Erhaltungsabschnitts eines elektrischen Energiebetrags (55, S24, S48) während des Neustarts des Verbrennungsmotors (12) erhalten wird, größer als oder gleich einem Referenzbetrag einer elektrischen Energie (Path1) ist, der als eine Referenz zum Bestimmen, ob eine Ausführung der Krafterhöhungssteuerung erlaubt werden sollte, eingestellt ist, und
dass der Unterdruck (Pb) in dem Verstärker (26) sich dem Atmosphärendruck annähert und dabei mit dem Krafterhöhungsstartreferenzwert (Pbth2) verglichen wird.

6. Fahrzeugsteuergerät nach Anspruch 4, **gekennzeichnet durch** einen Steuerungsinhalteinstellungsabschnitt (55, S27), der zumindest einen aus einer Erhöhungsdrehzahl und einem Erhöhungsbetrag der Bremskraft, die auf das Rad (FR, FL, RR, RL) aufgebracht wird, basierend auf einer von einem Zeitpunkt, zu dem sich der Unterdruck (Pb) in dem Verstärker (26), der während des Neustarts des Verbrennungsmotors (12) erhalten wird, dem Atmosphärendruck annähert und dabei mit dem Krafterhöhungsstartreferenzwert (Pbth2) verglichen wird, zu einem Zeitpunkt, zu dem die Krafterhöhungssteuerung mittels des Krafterhöhungssteuerungsabschnitts (55, S28) gestartet wird, verstrichenen Zeit (T2) einstellt,
wobei der Krafterhöhungssteuerungsabschnitt (55, S28), wenn die Krafterhöhungssteuerung durchgeführt wird, die Bremsvorrichtung (16) basierend auf dem Inhalt, der mittels des Steuerungsinhalteinstellungsabschnitts (55, S27) eingestellt ist, steuert.

7. Fahrzeugsteuergerät nach Anspruch 5, **dadurch gekennzeichnet, dass**, wenn der nutzbare elektrische Energiebetrag (Pa), der mittels des Erhaltungsabschnitts eines elektrischen Energiebetrags (55, S24, S48) während des Neustarts des Verbrennungsmotors (12) erhalten wird, geringer als der Referenzbetrag einer elektrischen Energie (Path1) ist, der Krafterhöhungssteuerungsabschnitt (55, S28, S51) die Krafterhöhungssteuerung nicht durchführt.

## Revendications

1. Appareil de commande de véhicule monté dans un véhicule ayant un dispositif de freinage (16), dans lequel
le dispositif de freinage (16) amène un servomoteur (26) à augmenter une force d'actionnement de frein produite par un conducteur en utilisant une pression négative (Pb) générée par l'actionnement d'un moteur (12), produisant ainsi une pression de liquide de frein (Pmc, Pwc) correspondant à la force d'actionnement de frein accrue dans un maître-cylindre (25) et un cylindre de roue (32a, 32b, 32c, 32d) et appliquant une force de freinage correspondant à la pression de fluide de frein (Pwc) dans le cylindre de roue (32a, 32b, 32c, 32d) à une roue (FR, FL, RR, RL),
l'appareil de commande de véhicule arrête et redémarre automatiquement le moteur (12),
l'appareil de commande de véhicule comprenant
une section de commande de maintien de force (55, S18, S45) qui effectue une commande de maintien de force pour maintenir la force de freinage appliquée à la roue (FR, FF, RR, RL) lorsque le redémarrage du moteur est initié en raison du rapprochement de la pression négative (Pb) dans le servomoteur (26) obtenue lorsque le moteur (12) est à l'arrêt de la pression atmosphérique par rapport à une valeur de référence de redémarrage (Pbth1), qui est réglée en tant que référence pour déterminer si le moteur (12) doit être redémarré ;
l'appareil de commande de véhicule étant **caractérisé par**
une section de commande d'augmentation de force (55, S28, S51) qui réalise une commande d'augmentation de force pour augmenter la force de freinage appliquée à la roue (FR, FL, RR, RL) lorsque la pression négative (Pb) dans le servomoteur (26) obtenue lors du redémarrage du moteur (12) se rapproche de la pression atmosphérique par rapport à une valeur de référence de démarrage d'augmentation de force (Pbth2), qui est plus proche de la pression atmosphérique que la valeur de référence de redémarrage (Pbth1).

2. Appareil de commande de véhicule selon la revendication 1, caractérisé en ce lorsque le temps écoulé (T1) depuis l'initiation du redémarrage du moteur (12) est inférieur à un temps de priorisation de redémarrage (T1th), qui est réglé pour entraîner le redémarrage du moteur (12) à réaliser en priorité sur la commande d'augmentation de force, la section de commande d'augmentation de force (55, S28) n'effectue pas la commande d'augmentation de force.

3. Appareil de commande de véhicule selon la revendication 2, **caractérisé par** :
une section d'obtention de gradient de variation (55, S11) qui obtient le gradient de variation (ΔPb) de la pression négative (Pb) dans le servomoteur (26) au redémarrage du moteur (12) ; et
une section de réglage de temps (55, S15) qui règle le temps de priorisation de redémarrage (T1th) à un temps plus court lorsque le gradient de variation (ΔPb) obtenu est grand que celui auquel le gradient de variation obtenu (ΔPb) est petit.

4. Appareil de commande de véhicule selon la revendication 2 ou 3, **caractérisé en ce que**, dans un cas dans lequel le temps écoulé (T1) depuis l'initiation du redémarrage du moteur (12) est plus long ou égal au temps de priorisation de redémarrage (T1th), la section de commande d'augmentation de force (55, S28) ne réalise pas la commande d'augmentation de force si le moteur (12) a été redémarré, mais effectue la commande d'augmentation de force si le moteur (12) n'a pas été redémarré et la pression négative (Pb) dans le servomoteur (26) se rapproche de la pression atmosphérique par rapport à la valeur de référence de démarrage d'augmentation de force (Pbth2).

5. Appareil de commande de véhicule selon l'une quelconque des revendications 1 à 4, **caractérisé par** une section d'obtention de quantité d'énergie électrique (55, S24, S48) qui obtient, en tant que quantité d'énergie électrique (Pa) utilisable, la quantité d'énergie électrique qui est peut être consommée par le dispositif de freinage (16) au redémarrage du moteur (12), dans lequel
la section de commande d'augmentation de force (55, S28, S51) réalise la commande d'augmentation de force lorsque les conditions suivantes sont satisfaites :
la quantité d'énergie électrique (Pa) utilisable obtenue par la section d'obtention de quantité d'énergie électrique (55, S24, S48) pendant le redémarrage du moteur (12) est supérieure ou égale à une quantité de référence d'énergie électrique (Path1) réglée en tant que référence pour déterminer si l'exécution de la commande d'augmentation de force doit être autorisée, et
la pression négative (Pb) dans le servomoteur (26) se rapproche de la pression atmosphérique par rapport à la valeur de référence de démarrage d'augmentation de force (Pbth2).

6. Appareil de commande de véhicule selon la revendication 4, **caractérisé par** une section de réglage de contenu de commande (55, S27) qui règle au moins l'une d'une vitesse d'augmentation et d'une quantité d'augmentation de la force de freinage appliquée à la roue (FR, FL, RR, RL) sur la base d'un temps écoulé (T2) depuis le moment où la pression négative (Pb) dans le servomoteur (26) obtenue lors du redémarrage du moteur (12) se rapproche de la pression atmosphérique par rapport à la valeur de référence de démarrage d'augmentation de force (Pbth2) jusqu'au moment où la commande d'augmentation de force est démarrée par la section de commande d'augmentation de force (55, S28),
dans lequel, lors de la réalisation de la commande d'augmentation de force, la section de commande d'augmentation de force (55, S28) commande le dispositif de freinage (16) sur la base du contenu réglé par la section de réglage de contenu de commande (55, S27).

7. Appareil de commande de véhicule selon la revendication 5, **caractérisé en ce que**, lorsque la quantité d'énergie électrique (Pa) utilisable obtenue par la section d'obtention de la quantité d'énergie électrique (55, S24, S48) pendant le redémarrage du moteur (12) est inférieure à la quantité de référence d'énergie électrique (Path1), la section de commande d'augmentation de force (55, S28, S51) ne réalise pas la commande d'augmentation de force.
